# EUROPEAN PATENT APPLICATION

(11) **EP 1 459 860 A2**
(43) Date of publication of application: **22.09.2004**
(21) Application number: 04006504.7
(22) Date of filing: 18.03.2004
(51) Int. Cl.: B28B 13/02, B28B 7/42, B28B 1/26

(54) **Method for forming variegated ceramic cladding articles, particularly tiles, plates or the like, and associated apparatus**

(30) Priority: 21.03.2003 IT mo20030083
(71) Applicant: Inteco Ceramic Supplies S.R.L., 41100 Modena (IT)
(72) Inventor: Gerardi, Elio, 41100 Modena (IT); Cerretti, Oscar, 41042 Fiorano Modenese (IT)
(74) Representative: Modiano, Guido, Dr.-Ing.

(57) **Abstract**

A method for forming variegated ceramic cladding articles, particularly tiles, plates or the like, comprising the steps of: preparing at least two colored slurries (B), each comprising a liquid vehicle and a ceramic mixture, pouring the slurries (B) under pressure into a mold (2), thickening the slurries within the mold so as to obtain at least an unfired cladding article, and removing the article from the mold (2).

## Description

The present invention relates to a method for forming variegated ceramic cladding articles, particularly tiles, plates or the like, and to the associated apparatus.

It is known that in the ceramic industry there is growing interest in the research and development of new types of cladding articles that have particular aesthetic characteristics, inspired by the decorative effect obtained for example in claddings constituted by plates of natural stones such as marble, granite and the like.

Different operating methods are currently used to produce these products.

A first distinction must be made between surface decoration methods and methods that instead allow to obtain a variegated and uneven coloring throughout the thickness of the articles.

As regards methods used at the industrial level to obtain a solid variegated decoration of articles, dry pressing forming methods and extrusion forming processes are currently known.

These processes generally use colored slurries, which are obtained by wet milling the raw materials and by a subsequent coloring step and are constituted by a water-based suspension of milled solid particles.

In the case of forming by pressing, the resulting slurries must be dried inside spray dryers (atomizers), so as to obtain a mixture of powders having a given particle size distribution and a low degree of humidity, which is then sent to the feed of the presses.

In order to obtain variegated decorative effects on the articles it is necessary to use devices for multiple loading of powders inside the pressing molds, so as to obtain a given distribution of the powders having different colorings.

In the case of forming by extrusion, the slurries must instead be thickened so as to obtain a ceramic paste that is then fed toward the die to perform the extrusion step; the partial drying of the slurries is performed within devices such as filter presses.

In order to obtain a variegated decoration on the articles, the resulting colored mixtures are mixed upstream of the die by means of a mixing unit of the screw-feeder type.

Known operating methods are not free from drawbacks, including the fact that they are organized into various substeps, which in order to be performed require bulky and expensive auxiliary equipment, which entails significant structural complications of the manufacturing facilities, increases in installation and management costs, extension and slowing of production lines, high labor costs and considerable energy consumption.

Further, the extension of the areas needed in order to be able to install a forming line of the type described above within factories is considerable and necessarily entails difficulties in finding such an extension as well as high investments.

Not least, the drying of the slurries causes a considerable dispersion of powders and a consequent atmospheric pollution of the work environments, which must therefore be served by aspiration and ventilation systems, which increase the installation and maintenance costs of production facilities.

Finally, particularly with forming by pressing, the resulting articles have decorations that are mutually substantially identical and are repeated, sometimes failing to give the covered surfaces a sufficiently natural and pleasant appearance.

The aim of the present invention is to eliminate the drawbacks noted above of the background art, by providing a method for forming variegated ceramic cladding articles, particularly tiles, plates or the like, and the associated apparatus, that allows to simplify the production lines and reduce their dimensions, to contain installation and maintenance costs, reduce energy consumption and reduce atmospheric pollution caused by powders dispersed in work environments.

Within this aim, an object of the present invention is to provide a method that is simple, relatively easy to provide in practice, safe in use, effective in operation, and has a relatively low cost.

This aim and these and other objects that will become better apparent hereinafter are achieved by the present method for forming variegated ceramic cladding articles, particularly tiles, plates or the like, characterized in that it comprises the steps of: preparing at least two colored slurries, each comprising a liquid vehicle and a ceramic mixture, pouring said slurries under pressure into a mold, thickening said slurries within said mold so as to obtain an unfired cladding article, and removing said article from said mold.

The associated apparatus is characterized in that it comprises a mold that is constituted by at least two portions that are arranged so as to mate at a flash line and between which there is at least one cavity, at least two ducts for feeding respective colored slurries, each slurry comprising a liquid vehicle and a ceramic mixture, into said cavity, said two ducts being associated with means for injecting under pressure said slurries and at least one channel for collecting and evacuating said liquid vehicle and/or the air from said cavity, which is associated with means for aspirating said liquid vehicle and/or air.

Further characteristics and advantages of the present invention will become better apparent from the following detailed description of a preferred but not exclusive embodiment of a method for forming variegated ceramic cladding articles, particularly tiles, plates or the like, and the associated apparatus, illustrated by way of non-limiting example in the accompanying drawings, wherein:
Figure 1 is a schematic and partial transverse sectional view of a possible embodiment of the apparatus according to the invention, illustrating the supply ducts;
Figure 2 is a schematic and partial transverse sectional view of the apparatus of Figure 1, illustrating the collection and evacuation channel;
Figure 3 is a schematic and partial front view of an alternative embodiment of the apparatus according to the invention;
Figure 4 is a schematic and partial perspective view of a detail of the apparatus according to the invention.

With reference to the figures, the reference numeral 1 generally designates an apparatus for forming variegated ceramic cladding articles, particularly tiles, plates or the like.

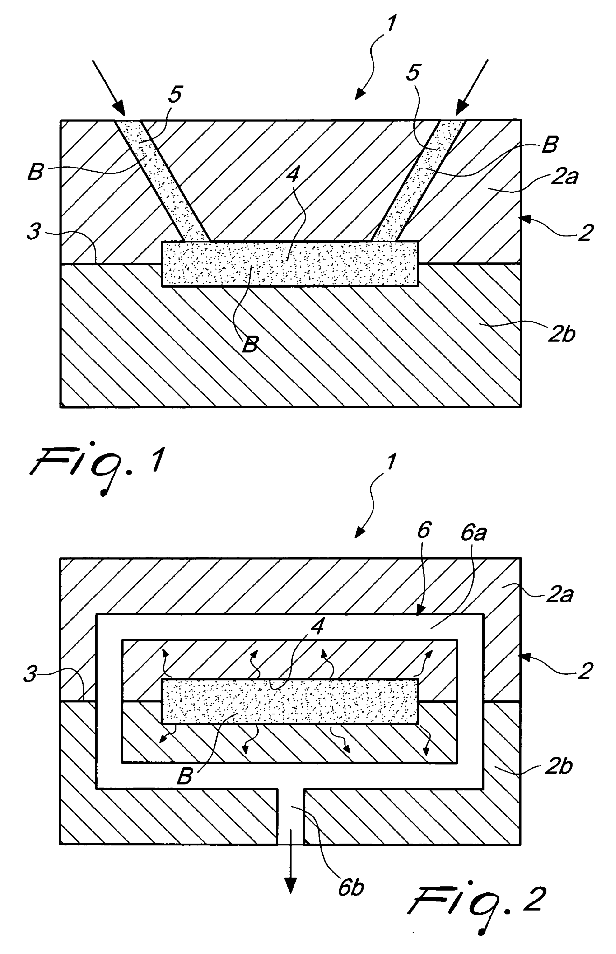

The apparatus 1 of Figures 1 and 2 comprises a mold 2, which is divided into two portions, namely an upper portion 2a and a lower portion 2b, which are mutually mated at a horizontal flash line 3 and between which a cavity 4 is provided that has a substantially rectangular and elongated transverse cross-section with respect to the flash line 3.

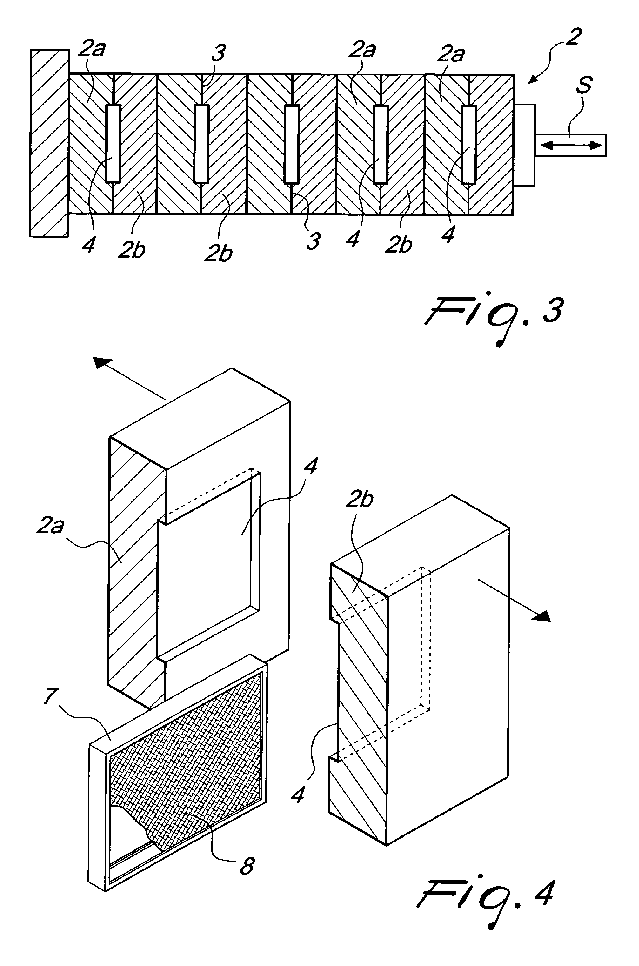

The apparatus 1 of Figure 3 instead comprises a mold 2, which is constituted by a plurality of portions 2a and 2b that are mutually mated in pairs at respective flash lines 3, which are substantially parallel to each other and vertical and form the corresponding cavities 4.

The portions are associated with conventional temporary packing means M, which are represented schematically by a fixed abutment surface B and by a movable pusher S.

As an alternative, the flash lines 3 may be arranged substantially horizontally.

The mold 2 is preferably made of a porous material such as microporous resin, chalk or others.

The shape and dimensions of the cavity 4 are complementary to the shape and dimensions of the article to be obtained; therefore, for each work cycle it is possible to obtain a single cladding article such as a tile or the like, or an article constituted by a sort of plate, from which it is optionally possible to obtain a plurality of tiles, tesserae or other articles by means of a subsequent cutting operation.

The mold 2 is further provided with two ducts 5 for feeding respectively colored slurries B into the cavity 4, said ducts being formed in the upper portion 2a.

The ducts 5 are associated with means for injecting said slurries under pressure, which comprise conventional pumps, not shown in the figures, which are arranged outside the mold 2 and whose respective intakes are associated with units for preparing the slurries B, such as conventional mills or the like, and the respective deliveries are associated with said ducts.

The ducts 5 are inclined with respect to the flash line 3; by modifying the angle of incidence of the ducts 5 with respect to said line, it is possible to modify the distribution of the veins and shades provided on the articles.

Each one of the slurries B comprises a suspension of solid particles of an appropriately colored ceramic mixture, dispersed in a liquid vehicle such as water or the like, optionally with the introduction of inert materials constituted by at least one among dried and fragmented slurry, flakes, grains or fragments of stone and the like.

Conveniently, the slurries B fed into the cavity 4 have different colors, so as to obtain a variegated decorative effect whose distribution is substantially random and not repeatable.

In an alternative embodiment of the invention, there can be a plurality of ducts 5 for feeding respective slurries B, depending on the type of decoration to be obtained.

Further, the mold 2 is provided with a channel 6 for collecting and evacuating the liquid vehicle and the air contained inside the cavity 4.

The channel 6 is constituted by an annular portion 6a that lies on a plane that is substantially perpendicular to the flash line 3, passes through the upper portion 2a and the lower portion 2b and surrounds the cavity 4, and by a portion 6b that exits from the mold 2, is connected to the annular portion 6a and lies below the cavity 4.

In an alternative embodiment of the mold 2, the channel 6 might be shaped differently and might lie for example below the cavity 4.

The portion 6b is associated with suction means, not shown in the figures, which are arranged outside the mold 2 and are suitable to produce a partial vacuum within said mold and draw the liquid vehicle and the air retained inside the cavity 4.

The operation of the suction means allows to extract the liquid vehicle and the air contained within the cavity 4, which flow out through the pores of the mold 2 until they reach the channel 6, so as to facilitate and accelerate the thickening of the slurries B.

Conveniently, the apparatus comprises conventional timer means that are associated with the injection means and with the suction means.

Further, the apparatus 1 may have means, not shown, for heating the mold 2, which can be constituted by conventional electric resistors, optionally accommodated within conventional heating panels.

Advantageously, the apparatus 1 comprises a frame 7 that can be accommodated detachably within the cavity 4 and substantially duplicates the perimeter of the cavity along the flash line 3 when the two portions 2a and 2b of the mold 2 are mutually adjacent.

The frame 7 perimetrically delimits the article being formed inside the cavity 4 and allows to extract it from the mold 2 when open, i.e., when the two portions 2a and 2b are mutually spaced (Figure 4).

The frame 7 can be associated with a closure wall 8, which also can be positioned within the cavity 4 on the opposite side with respect to the feed ducts and is made of a substantially porous material.

The method for forming variegated ceramic cladding articles according to the invention, performed by means of the apparatus 1, provides for a step of preparing the slurries B, which is performed according to the conventional method that is known in the ceramic sector, with the aid of mills or the like, a step of pouring under pressure the slurries B into the mold 2, a step of thickening the slurries inside the mold 2 so as to obtain at least one unfired cladding article, and a step of removing the article from the mold.

Conveniently, the thickening step can provide for the extraction of the liquid vehicle and of the air contained in the mold 2 by aspirating such fluids, and/or the heating of the mold to operating temperatures on the order of 40-60° C.

The pouring step is performed at working pressures on the order of 10-20 bars.

The method can provide for example for pouring performed at a working pressure of 12 bars and heating of the mold at 50° C.

The method can provide for a step of cutting the resulting article into a plurality of parts such as tiles or tesserae, said cutting being performed downstream of the step for removing said article from the mold 2.

The resulting article is then dried, fired and optionally polished according to conventional operating methods.

In practice it has been found that the described invention achieves the proposed aim and objects.

In particular, the method according to the invention can be performed by means of a simple apparatus that is inexpensive, has a reduced overall dimensions, and allows to obtain articles that have non-repeatable decorations and an absolutely natural effect.

The invention thus conceived is susceptible of numerous modifications and variations, all of which are within the scope of the appended claims.

All the details may further be replaced with other technically equivalent ones.

In practice, the materials used, as well as the shapes and the dimensions, may be any according to requirements without thereby abandoning the scope of the protection of the appended claims.

The disclosures in Italian Patent Application No. MO2003A000083 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A method for forming variegated ceramic cladding articles, particularly tiles, plates or the like, **characterized in that** it comprises the steps of: preparing at least two colored slurries, each comprising a liquid vehicle and a ceramic mixture, pouring said slurries under pressure into a mold, thickening said slurries within said mold so as to obtain at least an unfired cladding article, and removing said article from said mold.

2. The method according to claim 1, **characterized in that** said thickening step comprises the extraction of said liquid vehicle and/or air contained in said mold.

3. The method according to one or more of the preceding claims, **characterized in that** said extraction is performed by aspirating said liquid vehicle and/or said air.

4. The method according to one or more of the preceding claims, **characterized in that** said thickening step comprises heating said mold.

5. The method according to one or more of the preceding claims, **characterized in that** said heating is performed at working temperatures on the order of 40-60°C.

6. The method according to one or more of the preceding claims, **characterized in that** said pouring step is performed at working pressures on the order of 10-20 bars.

7. The method according to one or more of the preceding claims, **characterized in that** said mold is made of a material of a substantially porous type.

8. The method according to one or more of the preceding claims, **characterized in that** said extraction is performed by aspirating the liquid vehicle and/or air that seep through the pores of said mold.

9. The method according to one or more of the preceding claims, **characterized in that** it comprises a step of cutting said article into a plurality of parts, said step being performed after said removal step.

10. The method according to one or more of the preceding claims, **characterized in that** said preparation step comprises the introduction of inert materials within at least one of said slurries.

11. The method according to one or more of the preceding claims, **characterized in that** said inert materials comprise at least one of the following: dried and fragmented slurry, flakes, grains or fragments of stone and the like.

12. An apparatus for performing the method according to one or more of the preceding claims, **characterized in that** it comprises a mold that is constituted by at least two portions that mutually mate at a flash line and between which at least one cavity is formed, at least two ducts for feeding respective colored slurries, each slurry comprising a liquid vehicle and a ceramic mixture, into said cavity, said ducts being associated with means for injecting under pressure said slurries and at least one channel for collecting and evacuating said liquid vehicle and/or air from said cavity, which is associated with means for aspirating said liquid vehicle and/or air.

13. The apparatus according to one or more of the preceding claims, **characterized in that** said channel comprises at least one annular portion arranged so as to surround said cavity.

14. The apparatus according to one or more of the preceding claims, **characterized in that** said channel comprises at least one portion that exits from said mold.

15. The apparatus according to one or more of the preceding claims, **characterized in that** said ducts are substantially inclined with respect to said flash line.

16. The apparatus according to one or more of the preceding claims, **characterized in that** it comprises means for heating said mold.

17. The apparatus according to one or more of the preceding claims, **characterized in that** said heating means comprise at one electric resistor.

18. The apparatus according to one or more of the preceding claims,
**characterized in that** said mold is made of a substantially porous material.

19. The apparatus according to claim 18, **characterized in that** said material is of the type of microporous resin, chalk or others.

20. The apparatus according to one or more of the preceding claims, **characterized in that** it comprises timer means that are associated with said injection means and/or said suction means.

21. The apparatus according to one or more of the preceding claims, **characterized in that** it comprises a frame that can be accommodated detachably within said cavity and substantially duplicates the perimeter of said cavity along said flash line for forming and extracting said article.

22. The apparatus according to one or more of the preceding claims, **characterized in that** it comprises a closure wall that is associated with said frame and can be positioned inside said cavity on the opposite side of said feed ducts.

23. The apparatus according to one or more of the preceding claims, **characterized in that** said closure wall is made of a substantially porous material.

24. The apparatus according to one or more of the preceding claims, **characterized in that** said mold comprises a plurality of said portions, which are mutually mated in pairs at respective flash lines so as to form corresponding cavities.

25. The apparatus according to one or more of the preceding claims, **characterized in that** it comprises means for temporarily packing said portions.

26. The apparatus according to one or more of the preceding claims, **characterized in that** said flash lines are arranged substantially horizontally.

27. The apparatus according to one or more of the preceding claims, **characterized in that** said flash lines are arranged substantially vertically.
